# EUROPÄISCHE PATENTSCHRIFT

(11) **EP 3 239 490 B1**
(45) Veröffentlichungstag und Bekanntmachung des Hinweises auf die Patenterteilung: **14.08.2019**
(21) Anmeldenummer: 17166103.6
(22) Anmeldetag: 11.04.2017
(51) Int. Cl.: F02B 39/00, F02B 67/10, F02B 37/18, F02M 26/54, F02M 26/58, F02M 26/72, F02M 26/73

(54) **STELLVORRICHTUNG**
ACTUATING DEVICE
DISPOSITIF DE RÉGLAGE

(30) Priorität: 25.04.2016 DE 102016206953
(43) Veröffentlichungstag der Anmeldung: 01.11.2017
(60) Teilanmeldung: 19178239.0
(73) Patentinhaber: Mahle International GmbH, 70376 Stuttgart (DE)
(72) Erfinder: MAKAROW, Eugen, 71636 Ludwigsburg (DE); SALFELD, Edgar, 73669 Lichtenwald (DE); WETZEL, Florian, 73666 Baltmannsweiler (DE)
(74) Vertreter: BRP Renaud & Partner mbB Rechtsanwälte Patentanwälte Steuerberater

(56) Entgegenhaltungen:
- EP-A2- 1 450 020
- DE-A1- 3 915 732
- DE-A1-102005 056 209
- DE-A1-102014 106 517
- DE-U1-202006 006 135
- JP-A- 2002 349 641
- US-A1- 2010 031 938
- US-A1- 2013 049 502

## Beschreibung

Die vorliegende Erfindung betrifft eine Stellvorrichtung zum mechanischen Betätigen einer Komponente einer Maschine, gemäß dem Oberbegriff des Anspruchs 1. Die Erfindung betrifft insbesondere einen Abgasturbolader, der mit einer solchen Stellvorrichtung ausgestattet ist.

Bei einer Vielzahl von Maschinen gibt es Komponenten, die mechanisch betätigt werden müssen, damit die jeweilige Komponente die ihr zugeordnete Funktion innerhalb der jeweiligen Maschine erfüllen kann. Von bevorzugtem Interesse ist als Maschine hierbei ein Abgasturbolader, der als betätigbare Komponente beispielsweise eine variable Turbinengeometrie oder ein Wastegateventil aufweisen kann. Dementsprechend kann ein derartiger Abgasturbolader mit einer Stellvorrichtung ausgestattet sein, um die variable Turbinengeometrie bzw. das Wastegateventil bedarfsabhängig zu betätigen. Selbstverständlich lassen sich auch andere Maschinen mit derartigen Stellvorrichtungen ausstatten. Beispielsweise kann eine Pumpe eine solche Maschine repräsentieren, die als betätigbare Komponente ein Ventil zum Einstellen eines Volumenstroms aufweist. Mit Hilfe der Stellvorrichtung lässt sich dann das Ventil betätigen. Ebenso ist denkbar, eine Abgasrückführung als Maschine aufzufassen, die als betätigbare Komponente ein Abgasrückführventil zum Einstellen einer Abgasrückführrate aufweist. Auch diese Maschine kann mit einer Stellvorrichtung zum Betätigen des Abgasrückführventils ausgestattet sein.

Stellvorrichtungen, die sich zum mechanischen Betätigen einer Komponente einer Maschine eignen, umfassen grundsätzlich ein Gehäuse und einen im Gehäuse angeordneten Elektromotor zum Antreiben eines außen am Gehäuse angeordneten Stellglieds, das zum Koppeln mit der jeweiligen, zu betätigenden Komponente vorgesehen ist. Elektromotoren zeichnen sich durch ihre hohe Zuverlässigkeit aus. Im Gehäuse können weitere Bauteile der Stellvorrichtung angeordnet sein, wie beispielsweise ein Getriebe, das antriebsmäßig zwischen einer Antriebswelle des Elektromotors und dem jeweiligen Stellglied angeordnet ist. Ebenso kann im Gehäuse eine Sensorik zum Erkennen einer aktuellen Position oder Drehlage des Stellglieds relativ zum Gehäuse angeordnet sein.

Je nach Anwendungsfall kann eine derartige Stellvorrichtung relativ hohen Umgebungstemperaturen ausgesetzt sein. Bekanntermaßen hängt die Lebensdauer elektrischer und elektronischer Bauteile stark von der Betriebstemperatur ab; je höher die Betriebstemperatur, desto kürzer die Lebensdauer. Bei einer Stellvorrichtung mit Elektromotor kommt erschwerend hinzu, dass der Elektromotor während seines Betriebs selbst Wärme erzeugt.

Die Stellvorrichtung ist für eine Montage an der jeweiligen Maschine vorgesehen, deren Komponente mit der Stellvorrichtung betätigt werden soll. Es ist daher zweckmäßig, am Gehäuse einer derartigen Stellvorrichtung zum einen erste bzw. primäre Befestigungsstellen oder Befestigungsmittel oder Befestigungseinrichtungen vorzusehen, mit denen das Gehäuse bzw. die Stellvorrichtung an der jeweiligen Maschine befestigt werden kann.

Zur Qualitätssicherung kann vorgesehen sein, die Stellvorrichtung vor ihrer Montage an der jeweiligen Maschine im Hinblick auf ihre ordnungsgemäße Funktion zu überprüfen. Bei einem mehrteiligen Gehäuse ist es dabei von Vorteil, wenn die separaten Gehäuseteile für diese Funktionsüberprüfung bereits aneinander befestigt sind. Die Befestigung der Gehäuseteile aneinander im Rahmen der Montage der Stellvorrichtung erleichtert auch die Logistik, nämlich die Lagerhaltung und den Transport, beispielsweise vom Ort der Herstellung zum Ort der Funktionsüberprüfung sowie vom Ort der Funktionsüberprüfung zum Ort der Montage an der jeweiligen Maschine. Dementsprechend können zusätzlich zu den vorstehend genannten primären Befestigungsstellen zweite bzw. sekundäre Befestigungsstellen oder Befestigungsmittel oder Befestigungseinrichtungen vorgesehen sein, die es ermöglichen, die Gehäuseteile aneinander zu befestigen. Problematisch ist dabei der hierzu erforderliche Aufwand im Rahmen der Herstellung der Stellvorrichtung. Werden nämlich zum Beispiel Schraubverbindungen für die primären und sekundären Befestigungsstellen verwendet, müssen für die primären und für die sekundären Befestigungsstellen jeweils entsprechende Durchgangsöffnungen bzw. Gewindeöffnungen vorgesehen werden, wozu vergleichsweise viel Bauraum benötigt wird. Außerdem erhöhen sich dadurch die Kosten, da mehr Bauteile zu verbauen sind und mehr Montageschritte erforderlich sind.

Eine gattungsgemäße Stellvorrichtung ist aus der DE 20 2006 006 135 U1 bekannt. Sie ist als Fensterheber ausgestaltet und umfasst ein Gehäuse, das ein erstes Gehäuseteil und ein zweites Gehäuseteil aufweist, sowie einen im Gehäuse angeordneten Elektromotor zum Antreiben eines außen am Gehäuse angeordneten Stellglieds zum Koppeln mit der zu betätigenden Komponente, bei der es sich um ein Fenster handelt. Ferner sind mehrere primäre Befestigungsstellen zum Befestigen des Gehäuses an einem Fahrzeugaufbau vorgesehen, die als Rastverbindungen ausgestaltet sind. Außerdem sind mehrere sekundäre Befestigungsstellen vorgesehen, die zum Befestigen des ersten Gehäuseteils am zweiten Gehäuseteil dienen und die ebenfalls als Rastverbindungen ausgestaltet sind. Von Vorteil ist dabei, dass die primären Befestigungsstellen, wenn damit das Gehäuse am Fahrzeugaufbau befestigt ist, zusätzlich zu den sekundären Befestigungsstellen das erste Gehäuseteil am zweiten Gehäuseteil befestigen. Letzteres erfolgt bei der bekannten Stellvorrichtung dadurch, dass mit den mit dem ersten Gehäuseteil zusammenwirkenden primären Befestigungsmitteln das zweite Gehäuseteil zwischen dem ersten Gehäuseteil und dem Fahrzeugaufbau eingeklemmt wird. Bei der bekannten Stellvorrichtung sind hierzu die primären Befestigungsmittel seitlich neben den sekundären Befestigungsmitteln angeordnet.

Die vorliegende Erfindung beschäftigt sich mit dem Problem, für eine Stellvorrichtung der vorstehend beschriebenen Art eine verbesserte oder zumindest eine andere Ausführungsform anzugeben, die sich durch einen relativ kleinen Herstellungsaufwand auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Stellvorrichtung, deren Gehäuse ein erstes Gehäuseteil und ein zweites Gehäuseteil aufweist, und die mit primären Befestigungsstellen zum Befestigen des Gehäuses an der jeweiligen Maschine und mit wenigstens einer sekundären Befestigungsstelle zum Befestigen des ersten Gehäuseteils am zweiten Gehäuseteil ausgestattet ist, die primären Befestigungsstellen so auszugestalten, dass sie zusätzlich zur wenigstens einen sekundären Befestigungsstelle das erste Gehäuseteil am zweiten Gehäuseteil befestigen, sobald mit Hilfe der primären Befestigungsstellen das Gehäuse an der jeweiligen Maschine befestigt ist. Mit anderen Worten, solange die Stellvorrichtung nicht mit ihren primären Befestigungsstellen an der Maschine befestigt ist, sind das erste Gehäuseteil und das zweite Gehäuseteil über die wenigstens eine sekundäre Befestigungsstelle aneinander befestigt. Diese Fixierung der beiden Gehäuseteile aneinander mit Hilfe der wenigstens einen sekundären Befestigungsstelle ist dabei ausreichend dimensioniert für eine Funktionsprüfung der Stellvorrichtung und vereinfacht die Lagerung und den Transport der vormontierten Stellvorrichtungen vor ihrer finalen Montage an der jeweiligen Maschine. Sobald jedoch die Stellvorrichtung bzw. deren Gehäuse mit Hilfe der primären Befestigungsstellen an der jeweiligen Maschine befestigt wird, übernehmen die primären Befestigungsstellen auch die Fixierung der beiden Gehäuseteile aneinander. In diesem Zustand, in dem das Gehäuse an der Maschine mittels der primären Befestigungsstellen befestigt ist, wirken die primären Befestigungsstellen somit zusätzlich zu der wenigstens einen sekundären Befestigungsstelle, um die beiden Gehäuseteile aneinander zu fixieren. Dies bedeutet jedoch, dass die sekundären Befestigungsstellen nach dem Festlegen des Gehäuses an der Maschine nicht mehr benötigt werden und insoweit redundant sind. Die primären Befestigungsstellen sind für den ordnungsgemäßen dauerhaften Betrieb der Stellvorrichtung an der jeweiligen Maschine dimensioniert und können insbesondere thermisch bedingte Effekte und Alterungserscheinungen kompensieren. Die primären Befestigungsstellen ermöglichen somit eine deutlich höhere Belastung der Verbindung zwischen den beiden Gehäuseteilen als die wenigstens eine sekundäre Befestigungsstelle, da letztere nur für die Funktionsüberprüfung eine hinreichende Verbindung zwischen den beiden Gehäuseteilen gewährleisten muss.

Der erfindungsgemäße Vorschlag ermöglicht es somit, für die jeweilige sekundäre Befestigungsstelle eine preiswerte Lösung zu verwenden, da sie lediglich die Funktionsüberprüfung, nicht jedoch den Dauerbetrieb der Stellvorrichtung an der Maschine gewährleisten muss. Insbesondere kann somit auf eine Schraubverbindung zur Realisierung der jeweiligen sekundären Befestigungsstelle verzichtet werden.

Besonders vorteilhaft ist eine Ausführungsform, bei der die primären Befestigungsstellen jeweils eine erste Primärkontaktstelle und eine zweite Primärkontaktstelle aufweisen, die einander axial zugewandt sind, und bei der mehrere sekundäre Befestigungsstellen vorgesehen sind, die jeweils eine erste Sekundärkontaktstelle und eine zweite Sekundärkontaktstelle aufweisen, die einander axial zugewandt sind. Die primären und sekundären Befestigungsstellen sind nun hinsichtlich dieser Primärkontaktstellen und dieser Sekundärkontaktstellen so aufeinander abgestimmt, dass ein einem ersten Fall, in dem die beiden Gehäuseteile mittels der sekundären Befestigungsstellen aneinander befestigt sind und das Gehäuse nicht mittels der primären Befestigungsstellen an der Maschine befestigt ist, die ersten Sekundärkontaktstellen an den zugehörigen zweiten Sekundärkontaktstellen anliegen, während zwischen den ersten Primärkontaktstellen und den zugehörigen zweiten Primärkontaktstellen ein axialer Primärspalt ausgebildet ist, und dass in einem zweiten Fall, in dem die beiden Gehäuseteile mittels der sekundären Befestigungsstellen aneinander befestigt sind und das Gehäuse mittels der primären Befestigungsstellen an der Maschine befestigt ist, zwischen den ersten Sekundärkontaktstellen und den zugehörigen zweiten Sekundärkontaktstellen ein axialer Sekundärspalt ausgebildet ist, während die ersten Primärkontaktstellen an den zugehörigen zweiten Primärkontaktstellen anliegen. Hierdurch lässt sich im ersten Fall beispielsweise die jeweilige Funktionsprüfung durchführen, während der zweite Fall am Ende der endgültigen Montage vorliegt. Durch den Sekundärspalt kann eine gewisse axiale Beweglichkeit der beiden Gehäuseteile zueinander erhalten bleiben, beispielsweise um die mittels der Sekundärbefestigungsstellen hergestellte Befestigung der beiden Gehäuseteile aneinander wieder einfach lösen zu können, z.B. falls die Funktionsprüfung einen Bedarf für eine Nacharbeitung aufgezeigt hat.

Gemäß einer vorteilhaften Ausführungsform können die primären Befestigungsstellen jeweils als Schraubverbindung ausgestaltet sein, die jeweils eine Hülse mit einer Durchgangsöffnung zum Durchführen eines Schraubenschafts aufweisen, wobei die jeweilige Hülse axial einerseits einen Montageanschlag aufweist und axial andererseits einen Schraubenanschlag besitzt. Mit dem Montageanschlag stützt sich die jeweilige Hülse an einer Montagestelle der Maschine direkt ab, wenn das Gehäuse an der Maschine befestigt ist. An dem Schraubenanschlag stützt sich ein Schraubenkopf einer den Schraubenschaft aufweisenden Schraube oder eine auf den Schraubenschaft aufgeschraubte Mutter ab, wenn das Gehäuse an der Maschine befestigt ist. Die jeweilige Abstützung erfolgt dabei entweder direkt oder indirekt, zum Beispiel über eine Scheibe. Die jeweilige Hülse ist nun axial geteilt, derart, dass sie ein den Montageanschlag aufweisendes, am ersten Gehäuseteil ausgebildetes, erstes Hülsenteil und ein den Schraubanschlag aufweisendes, am zweiten Gehäuseteil ausgebildetes, zweites Hülsenteil aufweist. Beim Befestigen des Gehäuses an der Maschine wird somit der jeweilige Schraubenschaft durch die jeweilige Hülse bzw. durch deren Durchgangsöffnung axial hindurchgesteckt. Die jeweilige Schraubverbindung verspannt dann das erste Gehäuseteil zwischen dem zweiten Gehäuseteil und der Maschine. Im Einzelnen verspannt die jeweilige Schraubverbindung das erste Hülsenteil axial zwischen dem zweiten Hülsenteil und der jeweiligen Montagestelle der Maschine. Hierdurch wird eine formschlüssige und extrem sichere Fixierung des Gehäuses an der Maschine und der beiden Gehäuseteile aneinander erreicht.

Bei einer Weiterbildung kann das erste Gehäuse aus Kunststoff hergestellt sein, wobei dann die ersten Hülsenteile integral am ersten Gehäuseteil ausgeformt sind. Zusätzlich oder alternativ kann das zweite Gehäuseteil aus Kunststoff oder Metall hergestellt sein, wobei dann die zweiten Hülsenteile integral am zweiten Gehäuseteil ausgeformt sind. Diese materialeinheitliche Integration der Hülsenteile in das jeweilige Gehäuseteil, z.B. im Rahmen einer Herstellung als Gussteile, ermöglicht eine besonders preiswerte Herstellung, insbesondere als Spritzformteile.

Besonders zweckmäßig ist eine Ausführungsform, bei der das erste Hülsenteil aus Kunststoff besteht und eine den Montageanschlag definierende bzw. aufweisende erste Metallhülse enthält. Das zweite Hülsenteil ist dann entweder durch eine den Schraubanschlag definierende bzw. aufweisende zweite Metallhülse gebildet oder besteht ebenfalls aus Kunststoff und enthält eine den Schraubanschlag definierende bzw. aufweisende zweite Metallhülse. Im zusammengebauten Zustand stützt sich die erste Metallhülse axial an der zweiten Metallhülse ab, vorzugsweise direkt. Derartige Metallhülsen lassen sich besonders einfach als sogenannte "Einleger" in spritzgeformte Kunststoffteile integrieren, was die Herstellung besonders preiswert macht. Die Verwendung derartiger Metallhülsen ermöglicht hohe Schraubkräfte, die auch thermische Effekte kompensieren können.

Bei einer anderen Ausführungsform kann vorgesehen sein, dass bei der jeweiligen Hülse das eine Hülsenteil durch eine gemeinsame Metallhülse gebildet ist oder aus Kunststoff besteht und eine gemeinsame Metallhülse enthält. Diese gemeinsame Metallhülse definiert den Montageanschlag und den Schraubanschlag. Ferner erstreckt sich diese gemeinsame Metallhülse durch das andere Hülsenteil koaxial hindurch. Die Verwendung einer solchen gemeinsamen Metallhülse vereinfacht die Herstellung der Gehäuseteile. Außerdem können die an dem einen Gehäuseteil ausgebildeten gemeinsamen Metallhülsen beim Anbauen des anderen Gehäuseteils als Positionierhilfen verwendet werden.

Erfindungsgemäß sind mehrere sekundäre Befestigungsstellen vorgesehen, die jeweils in eine primäre Befestigungsstelle baulich integriert sind. Durch die Integration der sekundären Befestigungsstellen in die primären Befestigungsstellen benötigen die sekundären Befestigungsstellen am Gehäuse insgesamt deutlich weniger Bauraum als beispielsweise in einem alternativen Fall, bei dem die primären Befestigungsstellen und die sekundären Befestigungsstellen separat ausgeführt und räumlich voneinander getrennt, insbesondere in der Umfangsrichtung zueinander beabstandet entlang des Umfangs der Gehäuseteile angeordnet sind.

Besonders zweckmäßig ist eine Ausführungsform, bei der mehrere sekundäre Befestigungsstellen vorgesehen sind, die jeweils als Rastverbindung ausgestaltet sind. Die jeweilige Rastverbindung umfasst zweckmäßig einen am ersten Gehäuseteil ausgebildeten, insbesondere radial federnden Rasthaken und eine am zweiten Gehäuseteil ausgebildete Rastkontur, die mit dem Rasthaken zum Befestigen des ersten Gehäuseteils am zweiten Gehäuseteil zusammenwirkt. Insbesondere hintergreift hierzu der Rasthaken axial die zugehörige Rastkontur. Die jeweilige Rastkontur kann dabei als zusätzlich an einer Außenseite des zweiten Gehäuseteils vorgesehener Vorsprung ausgestaltet sein oder durch eine ohnehin an der Außenseite des zweiten Gehäuseteils vorhandene Kante gebildet sein. Derartige Rastverbindungen lassen sich für die Funktionsüberprüfung der Stellvorrichtung hinreichend stabil realisieren und ermöglichen ein besonders einfaches Befestigen der beiden Gehäuseteile aneinander.

Besonders zweckmäßig ist eine Ausführungsform, bei welcher der jeweilige Rasthaken am ersten Hülsenteil ausgebildet ist, während die jeweilige Rastkontur am zweiten Hülsenteil ausgebildet ist. Hierdurch wird wieder eine Integration der sekundären Befestigungsstellen in die primären Befestigungsstellen erreicht, die besonders platzsparend ist.

Weiterhin ist eine Ausführungsform von Vorteil, bei der das erste Gehäuseteil aus Kunststoff hergestellt ist und bei der die Rasthaken integral am ersten Gehäuseteil ausgeformt sind. Zusätzlich oder alternativ kann das zweite Gehäuseteil aus Kunststoff oder Metall hergestellt sein und die Rastkonturen können integral am zweiten Gehäuseteil ausgeformt sein. Durch diese Maßnahme lassen sich die Rastverbindungen besonders preiswert realisieren, insbesondere bereits beim Spritzgießen der Gehäuseteile.

Bevorzugt ist eine Ausführungsform, bei der die Rasthaken integral an den ersten Hülsenteilen ausgeformt sind und bei der die ersten Hülsenteile integral am ersten Gehäuseteil ausgeformt sind. Zusätzlich oder alternativ sind die Rastkonturen integral an den zweiten Hülsenteilen ausgeformt, während die zweiten Hülsenteile integral am zweiten Gehäuseteil ausgeformt sind.

Obwohl derartige Rastverbindungen als sekundäre Befestigungsstellen bevorzugt sind, können bei anderen Ausführungsformen auch andere sekundäre Befestigungsstellen zur Anwendung kommen. Beispielsweise können mehrere sekundäre Befestigungsstellen vorgesehen sein, die jeweils als Heißverstemmung ausgestaltet sind. Die jeweilige Heißverstemmung weist einen Kunststoffstift auf, der integral an dem aus Kunststoff hergestellten ersten Gehäuseteil ausgeformt ist, der eine am zweiten Gehäuseteil ausgebildete Stiftöffnung durchdringt und der an einer vom ersten Gehäuseteil abgewandten Seite am zweiten Gehäuseteil heißverstemmt ist. Beim Heißverstemmen wird das durch die Stiftöffnung hindurchragende freistehende Ende des Kunststoffstifts plastifiziert und umgeformt, derart, dass dadurch an diesem Ende des Kunststoffstifts der Querschnitt des Kunststoffstifts vergrößert wird, bis er größer ist als der freie Querschnitt der Stiftöffnung. Insoweit wird beim Heißverstemmen am freien Ende des Kunststoffstifts ein pilzartiger Kopf ausgeformt. Weiterhin wird beim Heißverstemmen dieser Kopf axial gegen das zweite Gehäuseteil angedrückt, um Axialspiel aus der Verbindung zwischen den beiden Gehäuseteilen herauszunehmen.

Entsprechend einer Weiterbildung kann die jeweilige Stiftöffnung im zweiten Gehäuseteil zusätzlich zur jeweiligen Durchgangsöffnung vorgesehen sein, die sich am zweiten Gehäuseteil durch das zweite Hülsenteil erstreckt. Insoweit sind die als Heißverstemmung ausgestalteten sekundären Befestigungsstellen separat zu den als Schraubverbindung ausgestalteten primären Befestigungsstellen vorgesehen und entlang des Umfangs verteilt am Gehäuse angeordnet.

Bei einer alternativen Ausführungsform kann die sekundäre Befestigungsstelle auch als Klebverbindung ausgestaltet sein. Eine derartige Klebverbindung ist zwar ungeeignet für eine dauerhafte Fixierung der beiden Gehäuseteile aneinander, kann jedoch für die Funktionsprüfung eine ausreichende Fixierung der beiden Gehäuseteile aneinander gewährleisten.

Eine andere Ausführungsform sieht vor, dass wenigstens eine tertiäre Befestigungsstelle zum Befestigen des ersten Gehäuseteils am zweiten Gehäuseteil vorgesehen ist, wobei die jeweilige tertiäre Befestigungsstelle derart ausgestaltet ist, dass sie unmittelbar nach ihrer Herstellung einen vorbestimmten Verfestigungszeitraum benötigt, um ihre Endfestigkeit zum Fixieren der Relativlage zwischen dem ersten Gehäuseteil und dem zweiten Gehäuseteil zu erreichen. Beispielsweise benötigt eine Klebverbindung einen gewissen Verfestigungszeitraum zum Aushärten bzw. Trocknen. Ebenso benötigt eine Schmelzverbindung, bei welcher zumindest ein Verbindungspartner in einen plastischen oder sogar flüssigen Zustand überführt wird, einen gewissen Verfestigungszeitraum zum Abkühlen und Erstarren. Außerdem ist nun vorgesehen, dass die jeweilige sekundäre Befestigungsstelle derart ausgestaltet ist, dass sie unmittelbar nach ihrer Herstellung die zu fixierende Relativlage zwischen dem ersten Gehäuseteil und dem zweiten Gehäuseteil definiert und zumindest solange vorfixiert bis die jeweilige tertiäre Befestigungsstelle ihre Endfestigkeit erreicht hat. Beispielsweise kann die sekundäre Befestigungsstelle eine Rastverbindung oder dergleichen sein. Mit anderen Worten, mit Hilfe der sekundären Befestigungsstellen können die Gehäuseteile solange aneinander befestigt werden, bis die tertiären Befestigungsstellen hergestellt und endfest sind. Danach werden die sekundären Befestigungsstellen an sich nicht mehr benötigt. Die sekundären Befestigungsstellen ermöglichen somit eine raschere Fertigung der Stellvorrichtungen, da sie bei noch unfertigen tertiären Befestigungsstellen aus der jeweiligen Maschine zum Herstellen der tertiären Befestigungsstellen entnommen werden können und die gewünschte Endfestigkeit z.B. während des Transports oder der Lagerung erreicht wird.

Vorteilhaft kann vorgesehen sein, dass die jeweilige tertiäre Befestigungsstelle als Heißverstemmung ausgestaltet ist, wobei die jeweilige Heißverstemmung eine an dem zweiten Gehäuseteil ausgebildete Stiftöffnung und einen Kunststoffstift aufweist, der integral an dem aus Kunststoff hergestellten ersten Gehäuseteil ausgeformt ist, die Stiftöffnung durchdringt und an einer vom ersten Gehäuseteil abgewandten Seite am zweiten Gehäuseteil heißverstemmt ist. Eine derartige Heißverstemmung lässt sich vergleichsweise einfach serienmäßig herstellen. Sie verfügt über eine hohe Festigkeit und lässt sich nicht unbemerkt manipulieren.

Zweckmäßig kann dabei die jeweilige Stiftöffnung im zweiten Gehäuseteil zusätzlich zur jeweiligen Durchgangsöffnung vorgesehen sein und dazu parallel verlaufen. Somit wird die Haltekraft der sekundären Befestigungsstelle genau dort erzeugt, wo sie zum Verfestigen der tertiären Befestigungsstelle benötigt wird.

Eine andere Weiterbildung schlägt vor, die jeweilige Stiftöffnung in der jeweiligen Hülse auszubilden. Hierdurch bauen die sekundären und tertiären Befestigungsstellen sehr kompakt.

Besonders kompakt ist eine Ausgestaltung, bei der jede oder wenigstens eine tertiäre Befestigungsstelle zusammen mit genau einer sekundären Befestigungsstelle in eine primäre Befestigungsstelle integriert ist.

Bei einer anderen vorteilhaften Ausführungsform kann im Gehäuse ein Kühlkanal für ein flüssiges Kühlmittel ausgebildet sein. Am Gehäuse können außerdem ein mit dem Kühlkanal fluidisch verbundener Kühlmitteleinlassanschluss und ein mit dem Kühlkanal fluidisch verbundener Kühlmittelauslassanschluss vorgesehen sein. Mit Hilfe eines derartigen Kühlkanals kann Wärme aus dem Gehäuse abgeführt und somit von der Stellvorrichtung weg transportiert werden. Mit Hilfe eines derartigen Kühlkanals kann somit die thermische Belastung elektrischer und/oder elektronischer Komponenten der Stellvorrichtung signifikant reduziert werden.

Besonders vorteilhaft ist eine Weiterbildung, bei welcher der Kühlkanal im zweiten Gehäuseteil ausgebildet ist und bei der die beiden Anschlüsse für Kühlmitteleinlass und Kühlmittelauslass am zweiten Gehäuseteil vorgesehen sind. Die Unterbringung des Kühlkanals und der zugehörigen Anschlüsse bzw. in nur einem der beiden Gehäuseteile vereinfacht die Realisierung einer derartigen aktiven Kühlung der Stellvorrichtung. Alternativ kann auch vorgesehen sein, dass der Kühlmitteleinlassanschluss an dem einen Gehäuseteil vorgesehen ist, während der Kühlmittelauslassanschluss am anderen Gehäuseteil vorgesehen ist. Diese Maßnahme kann die Anpassung an unterschiedliche Einbausituationen vereinfachen.

Bei einer anderen Weiterbildung kann vorgesehen sein, dass der Kühlkanal innerhalb des zweiten Gehäuseteils an einer vom ersten Gehäuseteil abgewandten Seite durch einen Kanalboden axial begrenzt ist, der sich in der Umfangsrichtung entlang des gesamten Kühlkanals erstreckt. Somit ist der Kühlkanal zwischen Kühlmitteleinlass und Kühlmittelauslass nicht axial aus dem zweiten Gehäuseteil herausgeführt. Vorzugsweise kann vorgesehen sein, dass der Kühlkanal innerhalb des zweiten Gehäuseteils vom Kühlmitteleinlassanschluss in der Umfangsrichtung zum Kühlmittelauslassanschluss führt. Diese Maßnahme bewirkt insbesondere, dass der Kühlkanal zwischen Kühlmitteleinlass und Kühlmittelauslass ausschließlich innerhalb des zweiten Gehäuseteils verläuft.

Besonders vorteilhaft ist eine Ausführungsform, bei welcher das zweite Gehäuseteil aus Metall hergestellt ist. Hierdurch kann die Wärmeübertragung vom Elektromotor auf das zweite Gehäuseteil und die Ableitung dieser Wärme durch den Kühlkanal erheblich verbessert werden.

Eine einfache Herstellbarkeit ergibt sich, wenn der Kühlkanal im zweiten Gehäuseteil an einer dem ersten Gehäuseteil zugewandten Seite axial offen ist und durch das erste Gehäuseteil axial verschlossen ist. Hierdurch lässt sich beispielsweise die Herstellbarkeit des zweiten Gehäuseteils mit integriertem Kühlkanal als Gussteil bzw. als Spritzformteil vereinfachen.

Der Kühlkanal kann den Elektromotor in Umfangsrichtung über mehr als 180° umgreifen, wodurch eine besonders intensive Kühlung realisierbar ist.

An einer vom Elektromotor abgewandten Seite des Kühlkanals kann eine in Umfangsrichtung geschlossen umlaufende Außendichtung zwischen dem ersten Gehäuseteil und dem zweiten Gehäuseteil angeordnet sein. Hierdurch kann eine Leckage von Kühlmittel nach außen, also in die Umgebung der Stellvorrichtung, vermieden werden. Die Außendichtung kann in Form eines separaten Bauteils ausgebildet und zweckmäßig in wenigstens eine Nut eingelegt sein, die am ersten Gehäuseteil und/oder am zweiten Gehäuseteil vorgesehen ist bzw. sind. Alternativ zu einer derartigen separaten Bauweise kann die Außendichtung auch an das erste Gehäuseteil oder an das zweite Gehäuseteil angespritzt oder angeschäumt sein.

Zusätzlich oder alternativ kann an einer dem Elektromotor zugewandten Seite des Kühlkanals eine in Umfangsrichtung geschlossen umlaufende Innendichtung zwischen dem ersten Gehäuseteil und dem zweiten Gehäuseteil ausgebildet sein. Mit Hilfe dieser Innendichtung wird eine Leckage von Kühlmittel in das Innere des Gehäuses vermieden. Beispielsweise kann dadurch ein Aufnahmeraum, in dem der Elektromotor untergebracht ist, vor einem Eindringen von Kühlmittel geschützt werden. Insbesondere kann dann ein preiswerter Elektromotor verwendet werden, der nicht flüssigkeitsdicht ausgestaltet ist. Auch hier kann die Innendichtung entweder als separate Dichtung oder als angespritzte oder angeschäumte Dichtung realisiert sein.

Vorzugsweise handelt es sich bei der Komponente, die mit Hilfe einer derartigen Stellvorrichtung betätigt werden kann, um eine variable Turbinengeometrie oder um ein Wastegateventil eines Abgasturboladers. Dementsprechend betrifft die vorliegende Erfindung auch einen Abgasturbolader, der mit einem Wastegateventil und/oder mit einer variablen Turbinengeometrie ausgestattet ist und der mit wenigstens einer Stellvorrichtung der vorstehend beschriebenen Art ausgestattet ist, deren Stellglied mit einem Betätigungshebel der variablen Turbinengeometrie oder des Wastegateventils mechanisch gekoppelt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Längsschnitt einer Stellvorrichtung,
- Fig. 2-4: je eine isometrische Ansicht der Stellvorrichtung, jedoch bei verschiedenen Ausführungsformen,
- Fig. 5: eine isometrische Detailansicht der Stellvorrichtung im Bereich einer primären und sekundären Befestigungsstelle,
- Fig. 6: einen Längsschnitt im Bereich einer derartigen Befestigungsstelle,
- Fig. 7-8: je einen Längsschnitt wie in Fig. 6, jedoch bei anderen Ausführungsformen und bei verschiedenen Zuständen a und b,
- Fig. 9: eine isometrische Ansicht auf einen Teil der Stellvorrichtung bei einer weiteren Ausführungsform.

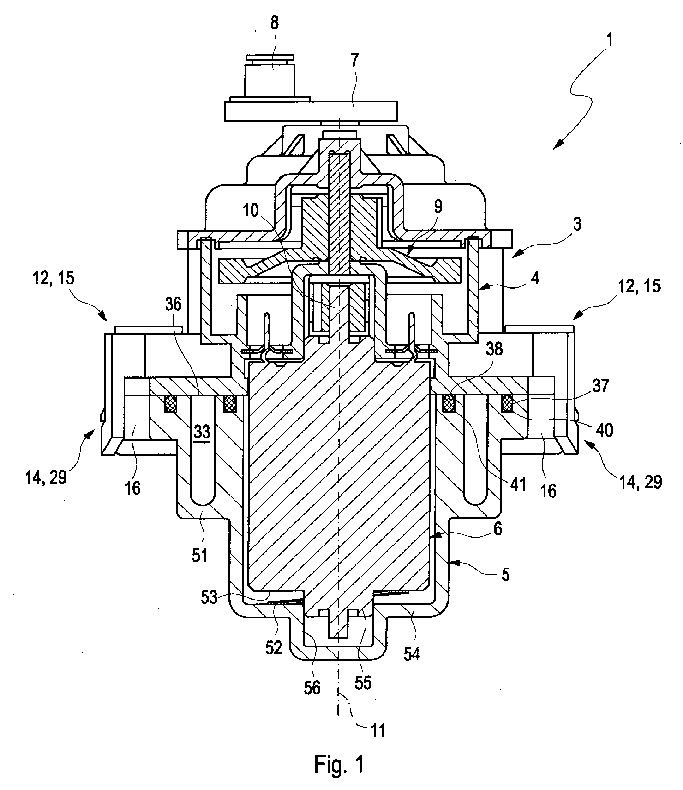

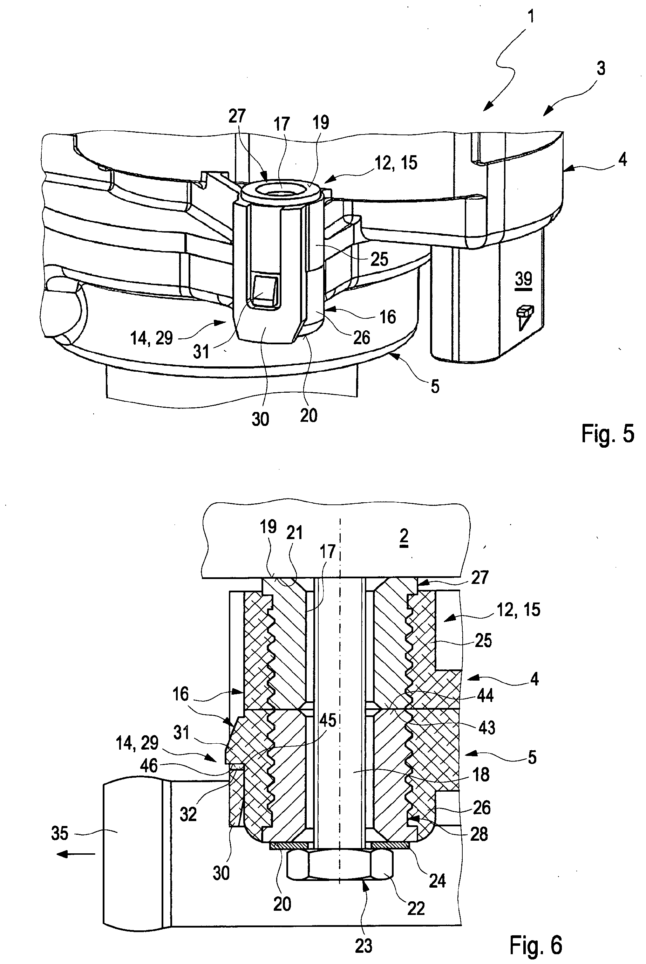

Entsprechend den Fig. 1 bis 9 umfasst eine Stellvorrichtung 1, die sich zum mechanischen Betätigen einer Komponente einer in Fig. 6 nur teilweise dargestellten Maschine 2 eignet, ein Gehäuse 3, das zweiteilig oder mehrteilig ausgestaltet ist und dementsprechend zumindest ein erstes Gehäuseteil 4 und ein zweites Gehäuseteil 5 aufweist. Ferner weist die Stellvorrichtung 1 einen im Gehäuse 3 angeordneten Elektromotor 6 auf, der zum Antreiben eines außen am Gehäuse 3 angeordneten Stellglieds 7 vorgesehen ist. Das Stellglied 7 dient seinerseits zum Koppeln mit der jeweils zu betätigenden Komponente. Beispielsweise weist das Stellglied 7 hierzu einen Zapfen 8 auf. Die Kopplung des Elektromotors 6 mit dem Stellglied 7 erfolgt im Gehäuse 3 über ein mehrstufiges Getriebe 9, das eingangsseitig mit einer Antriebswelle 10 des Elektromotors 6 und ausgangsseitig mit dem Stellglied 7 verbunden ist. Eine Rotationsachse 11 des Elektromotors 6, um welche die Antriebswelle 10 drehend angetrieben ist, definiert eine Axialrichtung, die parallel zur Rotationsachse 11 verläuft.

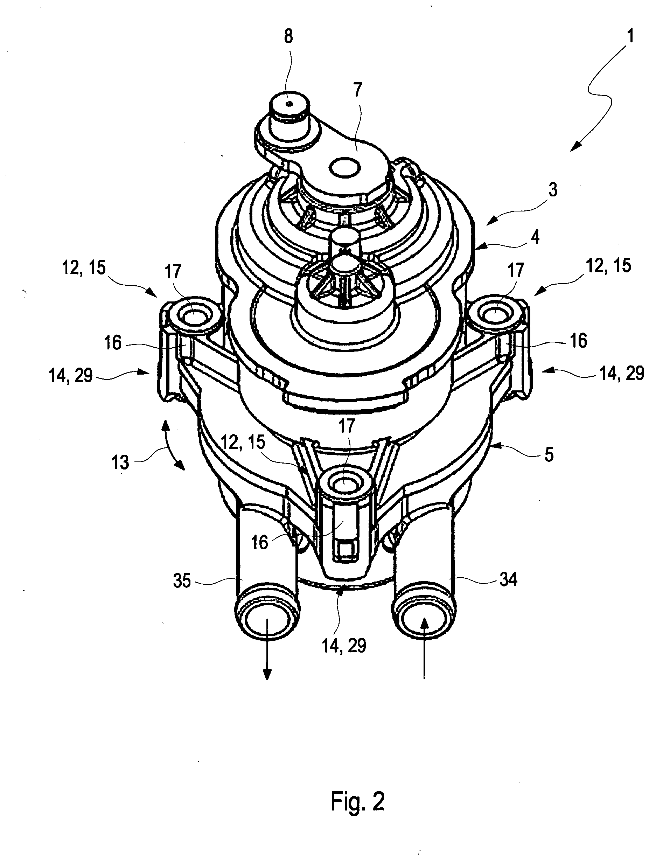

Die Stellvorrichtung 1 weist mehrere primäre Befestigungsstellen 12 auf, die zum Befestigen des Gehäuses 3 an der Maschine 2 dienen. Im gezeigten Beispiel sind rein exemplarisch drei derartige primäre Befestigungsstellen 12 vorgesehen, die in der Umfangsrichtung gleichmäßig verteilt angeordnet sind. Die Umfangsrichtung bezieht sich auf die Rotationsachse 11 und ist in den Fig. 2 bis 4 und 9 durch einen Doppelpfeil angedeutet und mit 13 bezeichnet. Ferner ist die Stellvorrichtung 1 mit wenigstens einer sekundären Befestigungsstelle 14 ausgestattet, die zum Befestigen des ersten Gehäuseteils 4 am zweiten Gehäuseteil 5 dient. Beim hier gezeigten Beispiel sind mehrere derartige sekundäre Befestigungsstellen 14 vorgesehen, nämlich rein exemplarisch genau drei, die ebenfalls in der Umfangsrichtung 13 gleichmäßig beabstandet verteilt angeordnet sind. Die primären und sekundären Befestigungsstellen 12, 14 können auch als primäre und sekundäre Befestigungsmittel 12, 14 bzw. als primäre und sekundäre Befestigungseinrichtungen 12, 14 bezeichnet werden.

Bei der hier vorgestellten Stellvorrichtung 1 sind die primären Befestigungsstellen 12 außerdem dazu vorgesehen, das erste Gehäuseteil 4 zusätzlich zu den sekundären Befestigungsstellen 14 am zweiten Gehäuseteil 5 zu befestigen, wenn mit Hilfe der primären Befestigungsstellen 12 das Gehäuse 3 an der Maschine 2 befestigt ist. Bei an der Maschine 2 befestigter Stellvorrichtung 1 sind somit die beiden Gehäuseteile 4, 5 redundant aneinander befestigt, nämlich einerseits mittels der sekundären Befestigungsstellen 14 und andererseits mittels der primären Befestigungsstellen 12.

Bei dem hier gezeigten Beispiel sind die primären Befestigungsstellen 12 jeweils als Schraubverbindung 15 ausgestaltet. Diese Schraubverbindungen 15 weisen jeweils eine Hülse 16 auf, die eine Durchgangsöffnung 17 enthält, durch die ein nur in Fig. 6 gezeigter Schraubenschaft 18 durchführbar ist. Bezug nehmend auf Fig. 6 weist die jeweilige Hülse 16 axial einenends einen Montageanschlag 19 und axial anderenends einen Schraubanschlag 20 auf. Im gezeigten montierten Zustand stützt sich der Montageanschlag 19 axial an einer Montagestelle 21 der Maschine 2 direkt ab. Im Unterschied dazu stützt sich am Schraubanschlag 20 ein Schraubenkopf 22 einer den Schraubenschaft 18 aufweisenden Schraube 23 indirekt über eine Scheibe 24 axial ab. Grundsätzlich kann auch zwischen der Montagestelle 21 und dem Montageanschlag 19 eine Scheibe für eine indirekte Abstützung angeordnet sein. Im Beispiel der Fig. 6 ist die Schraube 23 in die Maschine 2 eingeschraubt. Hierzu weist die Montagestelle 21 eine entsprechende, hier nicht gezeigte Gewindeöffnung auf. Alternativ dazu ist es ebenso möglich, den Schraubenschaft 18 in Form einer Gewindestange oder Stiftschraube zu realisieren, die von der Montagestelle 21 ausgeht, insbesondere fest an der Maschine 2 angeordnet ist. In diesem Fall wird auf diesen Schraubenschaft 18 eine entsprechende Mutter aufgeschraubt, die sich dann anstelle des Schraubenkopfs 22 über die Scheibe 24 am Schraubanschlag 20 axial abstützt.

Entsprechend den Fig. 6 bis 9 ist die zuvor genannte Hülse 16 der Schraubverbindung 15 axial geteilt, so dass sie ein erstes Hülsenteil 25 und ein zweites Hülsenteil 26 aufweist. Das erste Hülsenteil 25 ist am ersten Gehäuseteil 4 ausgebildet und weist den Montageanschlag 19 auf. Das zweite Hülsenteil 26 ist am zweiten Gehäuseteil 5 ausgebildet und weist den Schraubanschlag 20 auf. Vorzugsweise ist das erste Gehäuseteil 4 aus Kunststoff hergestellt. Die ersten Hülsenteile 25 sind dann zweckmäßig integral am ersten Gehäuseteil 4 ausgeformt. Das zweite Gehäuseteil 5 ist vorzugsweise ein Gussteil aus Kunststoff oder Metall. Bevorzugt handelt es sich um ein Metallteil, das sich durch eine erhöhte Wärmeleitung auszeichnet. Bevorzugt kommt dabei ein Leichtmetall bzw. eine Leichtmetalllegierung, vorzugsweise auf Aluminiumbasis, in Betracht.

Gemäß Fig. 6 besteht das erste Hülsenteil 25 somit vorzugsweise aus Kunststoff und enthält eine erste Metallhülse 27, die den Montageanschlag 19 definiert. Ein axiales Stirnende der ersten Metallhülse 27 bildet hierzu den Montageanschlag 19. Das erste Hülsenteil 27 ist beim Spritzformen des ersten Gehäuseteils 4 in der Spritzform angeordnet, so dass es formschlüssig in den Kunststoff des ersten Hülsenteils 25 eingebettet ist. Im Beispiel der Fig. 6 ist auch das zweite Hülsenteil 26 aus Kunststoff hergestellt und mit einer zweiten Metallhülse 28 ausgestattet, die den Schraubanschlag 20 definiert. Hierzu ist der Schraubanschlag 20 an einer axialen Stirnseite der zweiten Metallhülse 28 ausgebildet. Sofern das zweite Gehäuseteil 5 gemäß der hier bevorzugten Bauweise ein Metallgussteil ist, kann auf eine separate zweite Metallhülse 28 verzichtet werden; beziehungsweise kann dann das zweite Hülsenteil 26 selbst die zweite Metallhülse 28 bilden. Im montierten Zustand stützt sich die erste Metallhülse 27 axial an der zweiten Metallhülse 28 direkt ab.

Sofern wie hier die Anzahl an primären Befestigungsstellen 12 und sekundären Befestigungsstellen 14 gleich ist, wird eine Ausführungsform bevorzugt, bei der je eine sekundäre Befestigungsstelle 14 in je eine primäre Befestigungsstelle 12 integriert ist. Hierdurch ergibt sich eine signifikante Bauraumeinsparung entlang des Umfangs des Gehäuses 3.

Bei den hier gezeigten, bevorzugten Beispielen sind die sekundären Befestigungsstellen 14 jeweils als Rastverbindung 29 ausgestaltet. Die jeweilige Rastverbindung 29 weist einen am ersten Gehäuseteil 4, hier am ersten Hülsenteil 25, ausgebildeten, radial federelastischen Rasthaken 30 auf. Außerdem weist die jeweilige Rastverbindung 29 eine am zweiten Gehäuseteil 5 bzw. hier am zweiten Hülsenteil 26 ausgebildete Rastkontur 31 auf, die komplementär zum Rasthaken 30 geformt ist und die mit dem Rasthaken 30 zum Befestigen des ersten Gehäuseteils 4 am zweiten Gehäuseteil 5 zusammenwirkt. Die Rastkontur 31 ist hier in Form einer Rastnase mit Rampe ausgestaltet. Zweckmäßig ist der jeweilige Rasthaken 30 integral am ersten Hülsenteil 25 ausgeformt, während die Rastkontur 31 zweckmäßig integral am zweiten Hülsenteil 26 ausgebildet ist.

Erkennbar hintergreift der Rasthaken 30 die Rastkontur 31 axial, wodurch in axialer Richtung ein effizienter Formschluss entsteht, der eine hinreichende Positionierung und Fixierung der beiden Gehäuseteile 4, 5 aneinander gewährleistet, beispielsweise um eine Funktionsprüfung der Stellvorrichtung 1 durchführen zu können. Sobald jedoch, wie in Fig. 6 gezeigt, das Gehäuse 3 an der Maschine 2 befestigt ist, übernehmen die primären Befestigungsstellen 12 die Fixierfunktion zum Fixieren der beiden Gehäuseteile 4, 5 aneinander. Insbesondere kann dabei auch die Haltekraft der sekundären Befestigungsstellen 14 aufgehoben werden. In Fig. 6 ist ein Axialspalt 32 zwischen dem Rasthaken 30 und der Rastkontur 31 erkennbar, so dass in diesem montierten Zustand keine Axialkräfte zwischen Rasthaken 30 und Rastkontur 31 übertragen werden. Mit anderen Worten, die sekundäre Befestigungsstelle 14 bzw. die Rastverbindung 29 überträgt hier keine axialen Kräfte zwischen dem ersten Bauteil 4 und dem zweiten Bauteil 5 und ist insoweit deaktiviert.

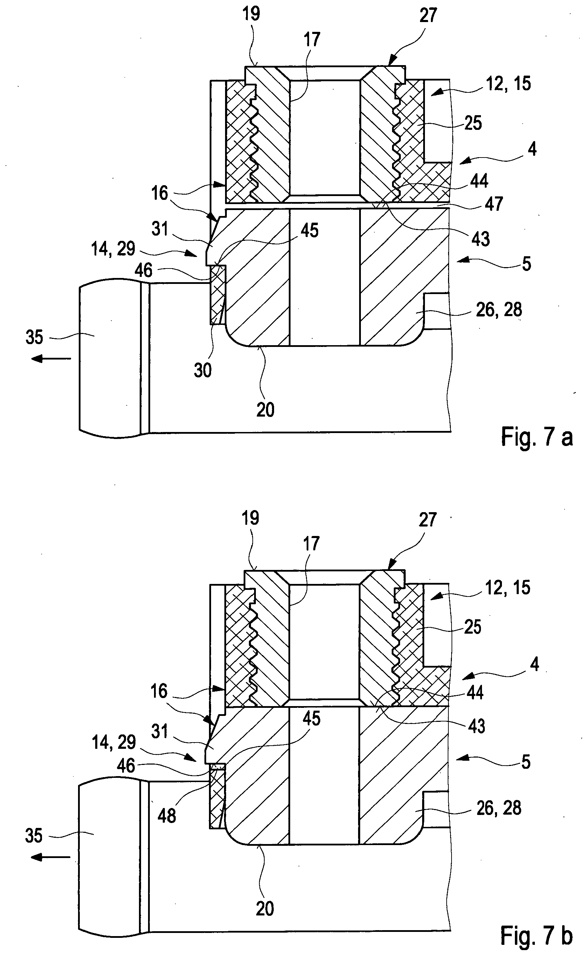

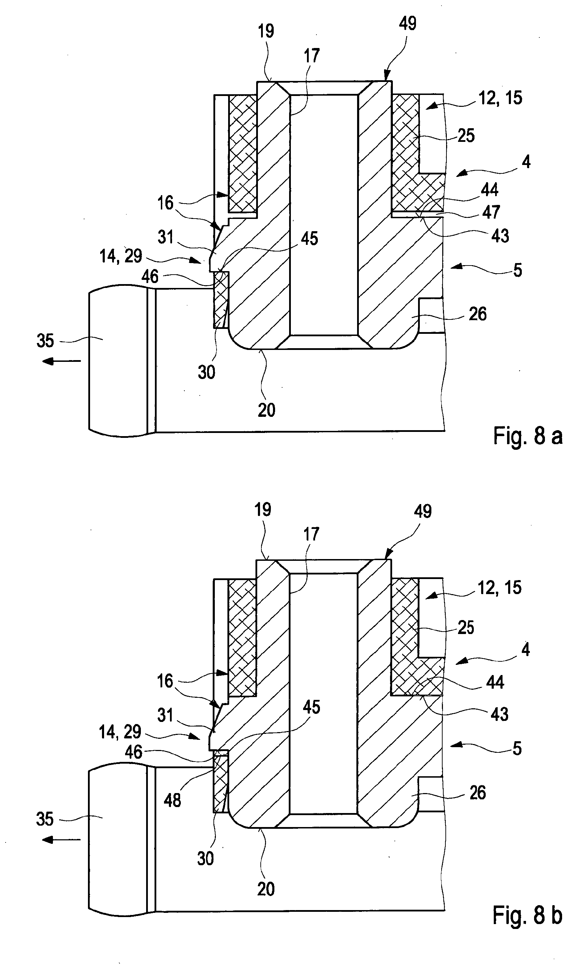

Dieses Zusammenspiel von primären Befestigungsstellen 12 und sekundären Befestigungsstellen 14 wird nachfolgend anhand der Fig. 7 und 8 näher erläutert, die sich durch die Ausgestaltung der Hülse 16 und/oder der jeweiligen Metallhülse 27, 28 sowie in der Materialauswahl für das zweite Gehäuseteil 5 voneinander unterscheiden. Darauf wird jedoch noch weiter unten eingegangen.

Gemäß den Fig. 7 und 8 weisen die primären Befestigungsstellen 12 jeweils eine erste Primärkontaktstelle 43 und eine zweite Primärkontaktstelle 44 auf, die einander axial zugewandt sind. Die erste Primärkontaktstelle 43 befindet sich an einer dem zweiten Hülsenteil 26 zugewandten axialen Stirnseite des ersten Hülsenteils 25. Die zweite Primärkontaktstelle 44 befindet sich an einer dem ersten Hülsenteil 25 zugewandten axialen Stirnseite des zweiten Hülsenteils 26. Im Beispiel der Fig. 6 befinden sich diese Primärkontaktstellen 43, 44 an den Metallhülsen 27, 28. Die sekundären Befestigungsstellen 14 weisen jeweils eine erste Sekundärkontaktstelle 45 und eine zweite Sekundärkontaktstelle 46 auf, die einander axial zugewandt sind. Die erste Sekundärkontaktstelle 45 befindet sich am Rasthaken 30, während sich die zweite Sekundärkontaktstelle 46 an der Rastkontur 31 befindet. In den Fig. 7a und 8a ist jeweils ein erster Fall oder erster Zustand dargestellt, während in den Fig. 7b und 8b jeweils ein zweiter Fall oder Zustand dargestellt ist. Im ersten Fall sind gemäß den Fig. 7a, 8a die beiden Gehäuseteile 4, 5 mittels der sekundären Befestigungsstellen 14 aneinander befestigt, wobei im ersten Fall das Gehäuse 3 noch nicht mittels der primären Befestigungsstellen 12 an der Maschine 2 befestigt ist. In diesem ersten Fall liegen die ersten Sekundärkontaktstellen 45 an den zugehörigen zweiten Sekundärkontaktstellen 46 an, während zwischen den ersten Primärkontaktstellen 43 und den zugehörigen zweiten Primärkontaktstellen 43 ein axialer Primärspalt 47 ausgebildet ist. Mit anderen Worten, im ersten Fall liegen die Primärkontaktstellen 43, 44 nicht aneinander an. Im zweiten Fall sind gemäß den Fig. 7b und 8b die beiden Gehäuseteile 4, 5 wieder mittels der sekundären Befestigungsstellen 14 aneinander befestigt, wobei das Gehäuse 3 im zweiten Fall außerdem mittels der primären Befestigungsstellen 12 an der Maschine 2 befestigt ist. Wie vorstehend beschrieben, sind die beiden Gehäuseteile 4, 5 in diesem zweiten Fall zusätzlich auch durch die Primärbefestigungsstellen 12 aneinander befestigt. In diesem zweiten Fall ist zwischen den ersten Sekundärkontaktstellen 45 und den zugehörigen zweiten Sekundärkontaktstellen 46 ein axialer Sekundärspalt 48 ausgebildet, während die ersten Primärkontaktstellen 43 an den zugehörigen zweiten Primärkontaktstellen 44 anliegen. Mit anderen Worten, im zweiten Fall liegen die Sekundärkontaktstellen 45, 46 nicht aneinander an. Der in Fig. 6 gezeigte Zustand entspricht somit dem zweiten Fall der Fig. 7b und 8b. Dementsprechend entspricht der in Fig. 6 gezeigte Axialspalt 32 dem Sekundärspalt 48 der Fig. 7b und 8b.

Während bei dem in Fig. 6 gezeigten Beispiel das zweite Gehäuseteil 5 aus Kunststoff hergestellt ist und das daran integral ausgebildete zweite Hülsenteil 26 eine darin eingesetzte zweite Metallhülse 28 aufweist, ist bei dem in Fig. 7 gezeigten Beispiel das zweite Gehäuseteil 5 aus Metall hergestellt. Die zweite Metallhülse 28 ist dabei durch das integral am zweiten Gehäuseteil 5 ausgeformte zweite Hülsenteil 26 gebildet.

Fig. 8 zeigt nun eine weitere Ausführungsform, bei der das zweite Hülsenteil 26, das integral am zweiten Gehäuseteil 5 ausgeformt ist, durch eine gemeinsame Metallhülse 49 gebildet ist. Im Beispiel der Fig. 8 ist das zweite Gehäuseteil 5 aus Metall hergestellt, so dass zweckmäßig diese gemeinsame Metallhülse 49 integral am zweiten Gehäuseteil 5 ausgeformt ist. Bei einer anderen Ausführungsform kann dagegen vorgesehen sein, diese gemeinsame Metallhülse 49 als separates Bauteil vorzusehen, insbesondere dann, wenn das zweite Gehäuseteil 5 aus Kunststoff hergestellt ist. Dann kann auch die gemeinsame Metallhülse 49 als Einleger ausgestaltet und in das jeweilige Hülsenteil 25 oder 26 eingebunden sein. Diese gemeinsame Metallhülse 49 weist axial einerseits den Montageanschlag 19 und axial andererseits den Schraubanschlag 20 auf. Ferner erstreckt sich diese gemeinsame Metallhülse 49 ausgehend vom zweiten Hülsenteil 26 durch das erste Hülsenteil 25 koaxial hindurch. Bei separater Bauweise der gemeinsamen Metallhülse 49 erstreckt sich diese durch beide Hülsenteile 25, 26 hindurch.

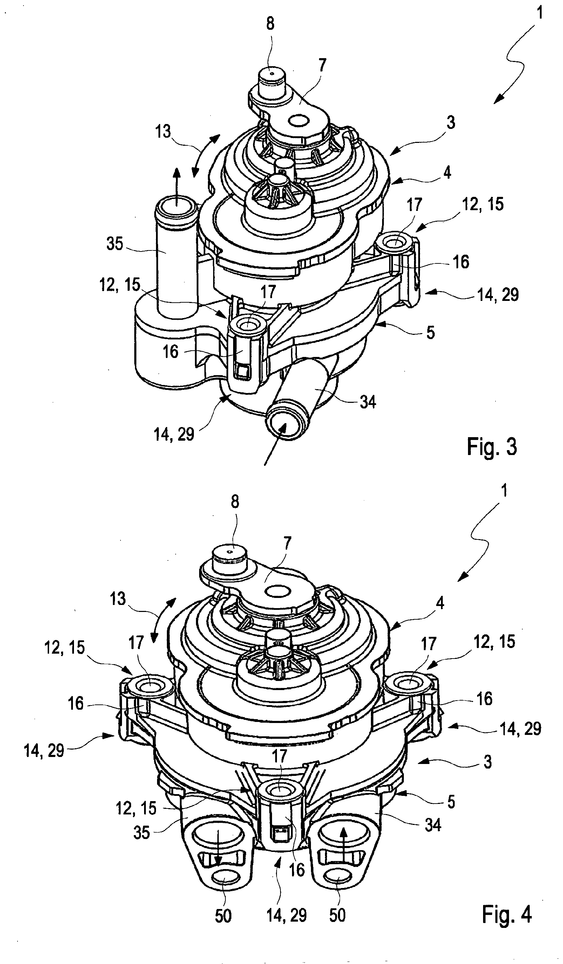

Zurückkommend auf das in Fig. 1 gezeigte Beispiel kann im Gehäuse 3 ein Kühlkanal 33 ausgebildet sein, der von einem flüssigen Kühlmittel durchströmbar ist. Ferner finden sich am Gehäuse 3 gemäß den Fig. 2 bis 4 ein Kühlmitteleinlassanschluss 34, der mit dem Kühlkanal 33 fluidisch verbunden ist, sowie ein Kühlmittelauslassanschluss 35, der ebenfalls mit dem Kühlkanal 33 fluidisch verbunden ist. Vorzugsweise ist der Kühlkanal 33 am bzw. im zweiten Gehäuseteil 5 vorgesehen. In den bevorzugten Beispielen der Fig. 2 und 4 sind außerdem die beiden Anschlüsse 34, 35 am zweiten Gehäuseteil 5 vorgesehen. Im Unterschied dazu zeigt Fig. 3 eine Variante, bei welcher der eine Anschluss, hier der Kühlmitteleinlassanschluss 34 am zweiten Gehäuseteil 5 ausgebildet ist, während der Kühlmittelauslassanschluss 35 am ersten Gehäuseteil 4 ausgebildet ist. Insbesondere ist der Kühlkanal 33 dabei in das zweite Gehäuseteil 5 formintegriert. Ferner sind die beiden Anschlüsse 34, 35 integral am ersten Gehäuseteil 4 bzw. am zweiten Gehäuseteil 5 ausgeformt. Sofern ein derartiger Kühlkanal 33 vorgesehen ist, handelt es sich beim zweiten Gehäuseteil 5 bevorzugt um ein Metallteil, um die anfallende Wärme rascher auf das Kühlmittel übertragen und vom Gehäuse 3 abführen zu können.

In den Beispielen der Fig. 2 und 3 sind die besagten Anschlüsse 34, 35 als Anschlussstutzen ausgestaltet, während Fig. 4 ein Beispiel zeigt, bei dem die Anschlüsse 34, 35 jeweils als Anschlussflansch ausgestaltet sind. Dem jeweiligen Anschlussflansch ist zur Befestigung an einem dazu komplementären Flansch jeweils eine Schrauböffnung 50 zugeordnet, durch die eine entsprechende Schraube durchführbar ist.

Wie sich Fig. 1 entnehmen lässt, ist der Kühlkanal 33 im zweiten Gehäuseteil 5 an einer dem ersten Gehäuseteil 4 zugewandten Seite axial offen. Diese axiale Öffnung ist in Fig. 1 mit 36 bezeichnet. Diese axiale Öffnung 36 ist durch das erste Gehäuseteil 4 verschlossen. Der Kühlkanal 33 umschließt den Elektromotor 6 in der Umfangsrichtung 13 über mehr als 180°, so dass der Kühlkanal 33 in einem Axialschnitt C-förmig ist. Die Endbereiche des Kühlkanals 33 kommunizieren mit je einem der Anschlüsse 34, 35. In der Umfangrichtung 13 zwischen den Anschlüssen 34, 35 ist der Kühlkanal 33 unterbrochen.

Gemäß Fig. 1 sind außerdem eine separate Außendichtung 37 und eine separate Innendichtung 38 vorgesehen. Die Außendichtung 37 läuft in der Umfangsrichtung 13 geschlossen um und ist an einer vom Elektromotor 6 radial abgewandten Seite des Kühlkanals 33 zwischen dem ersten Gehäuseteil 4 und dem zweiten Gehäuseteil 5 angeordnet. Die Innendichtung 38 läuft ebenfalls in der Umfangsrichtung 13 geschlossen um und ist an einer dem Elektromotor 6 radial zugewandten Seite des Kühlkanals 33 zwischen dem ersten Gehäuseteil 4 und dem zweiten Gehäuseteil 5 angeordnet. Diese als separate Bauteile realisierten Dichtungen 37, 38 sind hier in ringförmig umlaufende Nuten 40, 41 eingesetzt, die im zweiten Gehäuseteil 5 ausgebildet sind. Im Einzelnen ist die Außendichtung 37 in eine radial weiter außen liegende Außennut 40 eingesetzt, während die Innendichtung 38 in eine radial weiter innen liegende Innennut 41 eingesetzt ist.

Ferner lässt sich Fig. 1 außerdem entnehmen, dass der Kühlkanal 33 innerhalb des zweiten Gehäuseteils 5 an einer vom ersten Gehäuseteil 4 abgewandten Seite durch einen Kanalboden 51 axial begrenzt ist. Des Weiteren ist hier vorgesehen, dass der Kühlkanal 33 innerhalb des zweiten Gehäuseteils 5 vom Kühlmitteleinlassanschluss 34 in der Umfangsrichtung 13 zum Kühlmittelauslassanschluss 35 führt.

Gemäß Fig. 1 kann im zweiten Gehäuseteil 5 außerdem eine Vorspannfeder 52 angeordnet sein, z.B. in Form einer Wellfeder, die den Elektromotor 6 in Richtung zum ersten Gehäuseteil 4 antreibt bzw. vorspannt. Hierzu stützt sich die Vorspannfeder 52 einerseits an einer vom ersten Gehäuseteil 4 abgewandten Rückseite 53 des Elektromotors 6 und andererseits an einem vom ersten Gehäuseteil 4 abgewandten Gehäuseboden 54 des zweiten Gehäuseteils 5 ab. Die Vorspannfeder 52 kann ringförmig ausgestaltet sein und zweckmäßig einen axialen Vorsprung 55 des Elektromotors 6 umgreifen, der an dessen Rückseite 53 axial vorsteht. Im Beispiel kann der Vorsprung 55 in eine im Gehäuseboden 54 ausgesparte Vertiefung 56 eingreifen, in der er axial verstellbar geführt ist.

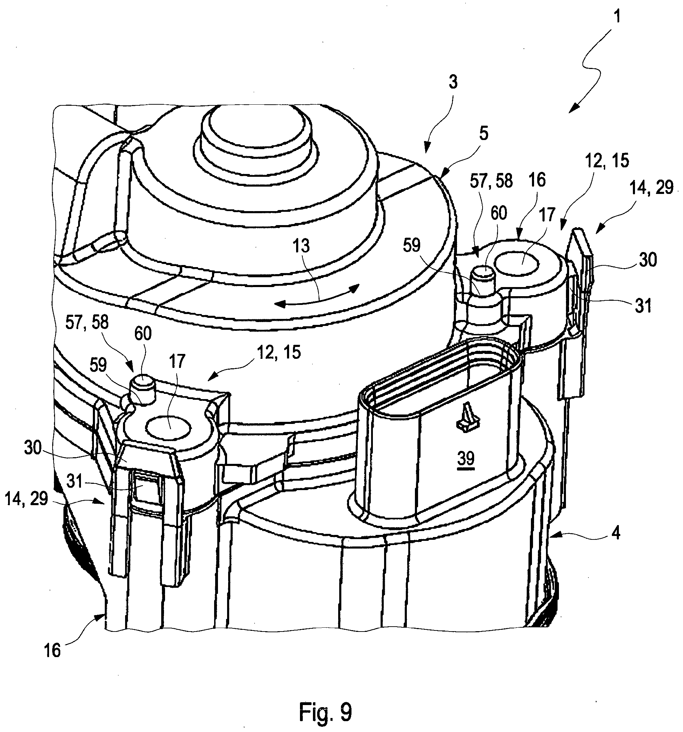

In den Fig. 5 und 9 ist ein elektrischer Anschluss 39 erkennbar, über den der Elektromotor 6 mit elektrischer Energie versorgt werden kann und über den der Elektromotor 6 angesteuert werden kann. Sofern im Gehäuse 3, außerdem eine Sensorik oder dergleichen angeordnet ist, beispielsweise um die aktuelle Drehlage des Stellglieds 7 zu detektieren, kann über den Elektroanschluss 39 auch eine entsprechende Datenleitung geführt sein.

Fig. 9 zeigt nun eine weitere Ausführungsform, bei der außerdem mehrere tertiäre Befestigungsstellen 57 zum Befestigen des ersten Gehäuseteils 4 am zweiten Gehäuseteil 5 vorgesehen sind. Rein exemplarisch sind ebenfalls genau drei solche tertiären Befestigungsstellen 57 vorgesehen, von denen in Fig. 9 allerdings nur zwei erkennbar sind. Diese tertiären Befestigungsstellen 57 können auch als tertiäre Befestigungsmittel 57 bzw. als tertiäre Befestigungseinrichtungen 57 bezeichnet werden. Die tertiären Befestigungsstellen 57 sind jeweils so ausgestaltet, dass sie unmittelbar nach ihrer Herstellung einen vorbestimmten Verfestigungszeitraum benötigen, um ihre Endfestigkeit zum Fixieren der Relativlage zwischen dem ersten Gehäuseteil 4 und dem zweiten Gehäuseteil 5 zu erreichen. Ferner ist nun abweichend zu den Ausführungsformen der Fig. 7 und 8 vorgesehen, dass die jeweilige sekundäre Befestigungsstelle 14 so ausgestaltet ist, z.B. als Rastverbindung 29, dass sie unmittelbar nach ihrer Herstellung die zu fixierende Relativlage zwischen dem ersten Gehäuseteil 4 und dem zweiten Gehäuseteil 5 definiert und zumindest solange vorfixiert bis die jeweilige tertiäre Befestigungsstelle 57 ihre Endfestigkeit erreicht hat. Im Hinblick auf die anhand der Fig. 7 und 8 erläuterten Ausführungsformen ist festzuhalten, dass sich beim nachfolgenden Befestigen des Gehäuses 3 an der jeweiligen Maschine 2 diese Relativlage zwischen den Gehäuseteilen 4, 5 nicht mehr ändert.

Gemäß der hier gezeigten Ausführungsform ist die jeweilige tertiäre Befestigungsstelle 57 als Heißverstemmung 58 ausgestaltet. Die jeweilige Heißverstemmung 58 weist eine an dem zweiten Gehäuseteil 5 ausgebildete Stiftöffnung 59 und einen Kunststoffstift 60 auf, der integral an dem aus Kunststoff hergestellten ersten Gehäuseteil 4 ausgeformt ist und die Stiftöffnung 59 durchdringt. Im fertig hergestellten Zustand der Heißverstemmung 58 ist der aus der Stiftöffnung 59 vorstehende Endabschnitt des Kunststoffstifts 60 an einer vom ersten Gehäuseteil 4 abgewandten Seite am zweiten Gehäuseteil 5 heißverstemmt. In Fig. 9 ist der jeweilige Kunststoffstift 60 noch nicht heißverstemmt. Erkennbar können die sekundären Befestigungsstellen 14, insbesondere die Rastverbindungen 29 bereits die mit Hilfe der tertiären Befestigungsstellen 57 bzw. der Heißverstemmungen 58 zu fixierende Relativlage zwischen den beiden Gehäuseteilen 4, 5 vorfixieren bzw. solange gewährleisten bis die tertiären Befestigungsstellen 57 bzw Heißverstemmungen 58 ihre Endfestigkeit erreicht haben.

Zweckmäßig ist im Beispiel die jeweilige Stiftöffnung 59 im zweiten Gehäuseteil 5 zusätzlich zur jeweiligen Durchgangsöffnung 17 vorgesehen ist und verläuft dazu parallel. Außerdem ist hier gezeigt, dass die jeweilige Stiftöffnung 59 in der jeweiligen Hülse 16 ausgebildet ist. Da hier die Anzahl an primären, sekundären und tertiären Befestigungsstellen 12, 14 und 57 gleich gewählt ist, nämlich je drei, lassen sich je eine tertiäre Befestigungsstelle 57 zusammen mit je einer sekundären Befestigungsstelle 14 in je eine primäre Befestigungsstelle 12 integrieren.

## Patentansprüche

1. Stellvorrichtung zum mechanischen Betätigen einer Komponente einer Maschine (2),
- mit einem Gehäuse (3), das ein erstes Gehäuseteil (4) und ein zweites Gehäuseteil (5) aufweist,
- mit einem im Gehäuse (3) angeordneten Elektromotor (6) zum Antreiben eines außen am Gehäuse (3) angeordneten Stellglieds (7) zum Koppeln mit der zu betätigenden Komponente,
- mit mehreren primären Befestigungsstellen (12) zum Befestigen des Gehäuses (3) an der Maschine (2),
- mit mehreren sekundären Befestigungsstellen (14) zum Befestigen des ersten Gehäuseteils (4) am zweiten Gehäuseteil (5),
- wobei die primären Befestigungsstellen (12), wenn damit das Gehäuse (3) an der Maschine (2) befestigt ist, zusätzlich zu der wenigstens einen sekundären Befestigungsstelle (14) das erste Gehäuseteil (4) am zweiten Gehäuseteil (5) befestigen,
**dadurch gekennzeichnet,**
**dass** je eine sekundäre Befestigungsstelle (14) in eine primäre Befestigungsstelle (12) integriert ist.

2. Stellvorrichtung nach Anspruch 1,
**dadurch gekennzeichnet,**
- **dass** die primären Befestigungsstellen (12) jeweils eine erste Primärkontaktstelle (43) und eine zweite Primärkontaktstelle (44) aufweisen, die einander zugewandt sind,
- **dass** mehrere sekundäre Befestigungsstellen (14) vorgesehen sind, die jeweils eine erste Sekundärkontaktstelle (45) und eine zweite Sekundärkontaktstelle (46) aufweisen, die einander zugewandt sind,
- **dass** für den Fall, dass die beiden Gehäuseteile (4, 5) mittels der sekundären Befestigungsstellen (14) aneinander befestigt sind und das Gehäuse (3) nicht mittels der primären Befestigungsstellen (12) an der Maschine (2) befestigt ist, die ersten Sekundärkontaktstellen (45) an den zugehörigen zweiten Sekundärkontaktstellen (46) anliegen, während zwischen den ersten Primärkontaktstellen (43) und den zugehörigen zweiten Primärkontaktstellen (44) ein Primärspalt (47) ausgebildet ist,
- **dass** für den Fall, dass die beiden Gehäuseteile (4, 5) mittels der sekundären Befestigungsstellen (14) aneinander befestigt sind und das Gehäuse (3) mittels der primären Befestigungsstellen (12) an der Maschine (2) befestigt ist, zwischen den ersten Sekundärkontaktstellen (45) und den zugehörigen zweiten Sekundärkontaktstellen (46) ein Sekundärspalt (48) ausgebildet ist, während die ersten Primärkontaktstellen (43) an den zugehörigen zweiten Primärkontaktstellen (44) anliegen.

3. Stellvorrichtung nach Anspruch 1 oder 2,
**dadurch gekennzeichnet,**
- **dass** die primären Befestigungsstellen (12) jeweils als Schraubverbindung (15) ausgestaltet sind, die jeweils eine Hülse (16) mit einer Durchgangsöffnung (17) zum Durchführen eines Schraubenschafts (18) aufweisen,
- **dass** die jeweilige Hülse (16) axial einenends einen Montageanschlag (19) und axial anderenends einen Schraubanschlag (20) aufweist,
- **dass** die jeweilige Hülse (16) axial geteilt ist und ein den Montageanschlag (19) aufweisendes, am ersten Gehäuseteil (4) ausgebildetes erstes Hülsenteil (25) und ein den Schraubanschlag (20) aufweisendes, am zweiten Gehäuseteil (5) ausgebildetes zweites Hülsenteil (26) aufweist.

4. Stellvorrichtung nach Anspruch 3,
**dadurch gekennzeichnet,**
- **dass** das erste Gehäuseteil (4) aus Kunststoff hergestellt ist und die ersten Hülsenteile (25) integral am ersten Gehäuseteil (4) ausgeformt sind, und/oder
- **dass** das zweite Gehäuseteil (5) aus Kunststoff oder Metall hergestellt ist und die zweiten Hülsenteile (26) integral am zweiten Gehäuseteil (5) ausgeformt sind.

5. Stellvorrichtung nach Anspruch 3 oder 4,
**dadurch gekennzeichnet,**
- **dass** das erste Hülsenteil (25) aus Kunststoff besteht und eine den Montageanschlag (19) definierende erste Metallhülse (27) enthält,
- **dass** das zweite Hülsenteil (26) durch eine den Schraubanschlag (20) definierende zweite Metallhülse (28) gebildet ist oder aus Kunststoff besteht und eine den Schraubanschlag (20) definierende zweite Metallhülse (28) enthält,
- **dass** sich die erste Metallhülse (27) axial an der zweiten Metallhülse (28) abstützt.

6. Stellvorrichtung nach Anspruch 3 oder 4,
**dadurch gekennzeichnet,**
- **dass** das eine Hülsenteil (25, 26) durch eine gemeinsame Metallhülse (49) gebildet ist oder aus Kunststoff besteht und eine gemeinsame Metallhülse (49) enthält,
- **dass** diese gemeinsame Metallhülse (49) den Montageanschlag (19) und den Schraubanschlag (20) definiert,
- **dass** sich diese gemeinsame Metallhülse (49) durch das andere Hülsenteil (26, 25) koaxial hindurch erstreckt.

7. Stellvorrichtung nach einem der Ansprüche 1 bis 6,
**dadurch gekennzeichnet,**
- **dass** mehrere sekundäre Befestigungsstellen (14) vorgesehen sind, die jeweils als Rastverbindung (29) ausgestaltet sind,
- **dass** die jeweilige Rastverbindung (29) einen am ersten Gehäuseteil (4) ausgebildeten, federnden Rasthaken (30) und eine am zweiten Gehäuseteil (5) ausgebildete Rastkontur (31) aufweist, die mit dem Rasthaken (30) zum Befestigen des ersten Gehäuseteils (4) am zweiten Gehäuseteil (5) zusammenwirkt.

8. Stellvorrichtung nach den Ansprüchen 3 und 7,
**dadurch gekennzeichnet,**
**dass** der jeweilige Rasthaken (30) am ersten Hülsenteil (25) ausgebildet ist, während die jeweilige Rastkontur (31) am zweiten Hülsenteil (26) ausgebildet ist.

9. Stellvorrichtung nach Anspruch 7 oder 8,
**dadurch gekennzeichnet,**
**dass** das erste Gehäuseteil (4) aus Kunststoff hergestellt ist und die Rasthaken (30) integral am ersten Gehäuseteil (4) ausgeformt sind.

10. Stellvorrichtung nach einem der Ansprüche 7 bis 9,
**dadurch gekennzeichnet,**
**dass** das zweite Gehäuseteil (5) aus Kunststoff oder Metall hergestellt ist und die Rastkonturen (31) integral am zweiten Gehäuseteil (5) ausgeformt sind.

11. Stellvorrichtung nach einem der Ansprüche 1 bis 10,
**dadurch gekennzeichnet,**
- **dass** wenigstens eine tertiäre Befestigungsstelle (57) zum Befestigen des ersten Gehäuseteils (4) am zweiten Gehäuseteil (5) vorgesehen ist,
- **dass** die jeweilige tertiäre Befestigungsstelle (57) derart ausgestaltet ist, z.B. als Klebverbindung oder Schmelzverbindung, dass sie unmittelbar nach ihrer Herstellung einen vorbestimmten Verfestigungszeitraum benötigt, um ihre Endfestigkeit zum Fixieren der Relativlage zwischen dem ersten Gehäuseteil (4) und dem zweiten Gehäuseteil (5) zu erreichen,
- **dass** die jeweilige sekundäre Befestigungsstelle (14) derart ausgestaltet ist, z.B. als Rastverbindung (29), dass sie unmittelbar nach ihrer Herstellung die zu fixierende Relativlage zwischen dem ersten Gehäuseteil (4) und dem zweiten Gehäuseteil (5) definiert und zumindest solange vorfixiert bis die jeweilige tertiäre Befestigungsstelle (57) ihre Endfestigkeit erreicht hat.

12. Stellvorrichtung nach Anspruch 11,
**dadurch gekennzeichnet,**
**dass** die jeweilige tertiäre Befestigungsstelle (57) als als Heißverstemmung (58) ausgestaltet ist,
- **dass** die jeweilige Heißverstemmung (58) eine an dem zweiten Gehäuseteil (5) ausgebildete Stiftöffnung (59) und einen Kunststoffstift (60) aufweist, der integral an dem aus Kunststoff hergestellten ersten Gehäuseteil (4) ausgeformt ist, die Stiftöffnung (59) durchdringt und an einer vom ersten Gehäuseteil (4) abgewandten Seite am zweiten Gehäuseteil (5) heißverstemmt ist.

13. Stellvorrichtung nach Anspruch 12 sowie nach einem der Ansprüche 3 bis 5,
**dadurch gekennzeichnet,**
**dass** die jeweilige Stiftöffnung (59) im zweiten Gehäuseteil (5) zusätzlich zur jeweiligen Durchgangsöffnung (17) vorgesehen ist und dazu parallel verläuft.

14. Stellvorrichtung nach Anspruch 12 oder 13 sowie nach einem der Ansprüche 3 bis 5,
**dadurch gekennzeichnet,**
**dass** die jeweilige Stiftöffnung (59) in der jeweiligen Hülse (16) ausgebildet ist.

15. Stellvorrichtung nach einem der Ansprüche 11 bis 14,
**dadurch gekennzeichnet,**
**dass** jede oder wenigstens eine tertiäre Befestigungsstelle (57) zusammen mit genau einer sekundären Befestigungsstelle (14) in eine primäre Befestigungsstelle (12) integriert ist.

## Claims

1. Control device for the mechanical operation of a component of a machine (2),
- with a housing (3), which has a first housing part (4) and a second housing part (5),
- with an electric motor (6) arranged in the housing (3) for driving a control element (7) arranged on the outside of the housing (3) for coupling with the component to be activated,
- with several primary attachment points (12) for securing the housing (3) onto the machine (2),
- with several secondary attachment point (14) for securing the first housing part (4) onto the second housing part (5),
- wherein the primary attachment points (12), when the housing (3) is attached by the latter onto the machine (2), in addition to the at least one secondary attachment point (14) secure the first housing part (4) onto the second housing part (5),
**characterised in that**
a secondary attachment point (14) is integrated into a primary attachment point (12).

2. Control device according to claim 1,
**characterised in that**
- the primary attachment points (12) each have a first primary contact point (43) and a second primary contact point (44) which face one another,
- several secondary attachment points (14) are provided which each have a first secondary contact point (45) and a second secondary contact point (46), which face one another,
- if both housing parts (4, 5) are attached to one another by means of the secondary attachment points (14) and the housing (3) is not attached onto the machine (2) by means of the primary attachment points (12), the first secondary contact points (45) bear on the associated second secondary contact points (46), whereas a primary gap (47) is formed between the first primary contact points (43) and the associated second primary contact points (44),
- if the two housing parts (4, 5) are attached to one another by means of the secondary attachment points (14) and the housing (3) is attached by means of the primary attachment points (12) on the machine (2), between the first secondary contact points (45) and the associated second secondary contact points (46) a secondary gap (48) is formed, whereas the first primary contact points (43) bear on the associated second primary contact points (44).

3. Control device according to claim 1 or 2,
**characterised in that**
- the primary attachment points (12) are configured respectively as a screw connection (15) which each have a sleeve (16) with a through opening (17) for feeding through a screw shaft (18),
- the respective sleeve (16) has a mounting stop (19) axially at one end and a screw stop (20) axially at the other end,
- the respective sleeve (16) is divided axially and has a first sleeve part (25) having the mounting stop (19) formed on the first housing part (4) and a second sleeve part (26) having the screw stop (20) formed on the second housing part (5).

4. Control device according to claim 3,
**characterised in that**
- the first housing part (4) is made of plastic and the first sleeve parts (25) are formed integrally on the first housing part (4), and/or
- the second housing part (5) is made of plastic or metal and the second sleeve parts (26) are formed to be integral with the second housing part (5).

5. Control device according to claim 3 or 4,
**characterised in that**
- the first sleeve part (25) is made of plastic and includes a first metal sleeve (27) defining the mounting stop (19),
- the second sleeve part (26) is formed by a second metal sleeve (28) defining the screw stop (20) or is made of plastic and includes a second metal sleeve (28) defining the screw stop (20),
- the first metal sleeve (27) is supported axially on the second metal sleeve (28).

6. Control device according to claim 3 or 4,
**characterised in that**
- the one sleeve part (25, 26) is formed by a common metal sleeve (49) or is made of plastic and includes a common metal sleeve (49),
- said common metal sleeve (49) defines the mounting stop (19) and the screw stop (20),
- said common metal sleeve (49) extends coaxially through the other sleeve part (26, 25).

7. Control device according to any of claims 1 to 6,
**characterised in that**
- several secondary attachment points (14) are provided, which are configured respectively as an engagement connection (29),
- the respective engagement connection (29) has a resilient engagement hook (30) formed on the first housing part (4) and a detent contour (31) formed on the second housing part (5), which cooperates with the engagement hook (30) for securing the first housing part (4) onto the second housing part (5).

8. Control device according to claims 3 and 7,
**characterised in that**
the respective engagement hook (30) is formed on the first sleeve part (25), whereas the respective detent contour (31) is formed on the second sleeve part (26).

9. Control device according to claim 7 or 8,
**characterised in that**
- the first housing part (4) is made of plastic and the engagement hooks (30) are formed to be integral with the first housing part (4).

10. Control device according to any of claims 7 to 9,
**characterised in that**
- the second housing part (5) is made of plastic or metal and the detent contours (31) are formed to be integral with the second housing part (5).

11. Control device according to any of claims 1 to 10,
**characterised in that**
- at least one tertiary attachment point (57) for securing the first housing part (4) is provided on the second housing part (5),
- the respective tertiary attachment point (57) is configured for example as a bonded connection or melt splice, such that it requires a predefined hardening period immediately after its manufacture, in order to obtain its final strength for fixing the relative position between the first housing part (4) and the second housing part (5),
- the respective secondary attachment point (14) is configured for example as an engagement connection (29) such that immediately after its manufacture it defines the relative position to be fixed between the first housing part (4) and the second housing part (5) and prefixes it at least until the respective tertiary attachment point (57) has reached its end strength.

12. Control device according to claim 11,
**characterised in that**
- the respective tertiary attachment point (57) is in the form of hot caulk (58),
- the respective hot caulk (58) has a pin opening (59) formed on the second housing part (5) and a plastic pin (60) which is formed to be integral with the first housing part (4) made of plastic, penetrates the pin opening (59) and is hot caulked on a side on the second housing part (5) facing away from the first housing part (4).

13. Control device according to claim 12 and according to any of claims 3 to 5,
**characterised in that**
the respective pin opening (59) is provided in the second housing part (5) in addition to the respective through opening (17) and is parallel to the latter.

14. Control device according to claim 12 or 13 and according to any of claims 3 to 5,
**characterised in that**
the respective pin opening (59) is formed in the respective sleeve (16).

15. Control device according to any of claims 11 to 14,
**characterised in that**
each or at least one tertiary attachment point (57) is integrated together with precisely one secondary attachment point (14) into a primary attachment point (12).

## Revendications

1. Dispositif de réglage pour l'actionnement mécanique d'un composant d'une machine (2),
- avec un carter (3), qui présente une première partie de carter (4) et une deuxième partie de carter (5),
- avec un moteur électrique (6) agencé dans le carter (3) pour l'entraînement d'un organe de réglage (7) agencé à l'extérieur du carter (3) pour le couplage avec le composant à actionner,
- avec plusieurs points de fixation primaires (12) pour la fixation du carter (3) à la machine (2),
- avec plusieurs points de fixation secondaires (14) pour la fixation de la première partie de carter (4) à la deuxième partie de carter (5),
- dans lequel les points de fixation primaires (12), lorsque le carter (3) est fixé avec ceux-ci à la machine (2), fixent en plus de l'au moins un point de fixation secondaire (14), la première partie de carter (4) à la deuxième partie de carter (5),
**caractérisé en ce**
**que** respectivement un point de fixation secondaire (14) est intégré dans un point de fixation primaire (12).

2. Dispositif de réglage selon la revendication 1,
**caractérisé en ce**
- **que** les points de fixation primaires (12) présentent respectivement un premier point de contact primaire (43) et un deuxième point de contact primaire (44), qui sont tournés l'un vers l'autre,
- **que** plusieurs points de fixation secondaires (14) sont prévus, qui présentent respectivement un premier point de contact secondaire (45) et un deuxième point de contact secondaire (46), qui sont tournés l'un vers l'autre,
- **qu'**au cas où les deux parties de carter (4, 5) sont fixées l'une à l'autre au moyen des points de fixation secondaires (14) et le carter (3) n'est pas fixé au moyen des points de fixation primaires (12) à la machine (2), les premiers points de contact secondaires (45) s'appuient sur les deuxièmes points de contact secondaires (46) correspondants, alors qu'une fente primaire (47) est formée entre les premiers points de contact primaires (43) et les deuxièmes points de contact primaires (44) correspondants,
- **qu'**au cas où les deux parties de carter (4, 5) sont fixées l'une à l'autre au moyen des points de fixation secondaires (14) et le carter (3) est fixé au moyen des points de fixation primaires (12) à la machine (2), une fente secondaire (48) est formée entre les premiers points de contact secondaires (45) et les deuxièmes points de contact secondaires (46) correspondants, alors que les premiers points de contact primaires (43) s'appuient sur les deuxièmes points de contact primaires (44) correspondants.

3. Dispositif de réglage selon la revendication 1 ou 2,
**caractérisé en ce**
- **que** les points de fixation primaires (12) sont configurés respectivement en tant que raccord vissé (15), qui présentent respectivement une douille (16) avec une ouverture de passage (17) pour le passage d'une tige de vis (18),
- **que** la douille (16) respective présente axialement à une extrémité une butée de montage (19) et axialement à une autre extrémité une butée de vissage (20),
- **que** la douille (16) respective est divisée axialement et présente une première partie de douille (25) présentant la butée de montage (19), réalisée au niveau de la première partie de carter (4) et une deuxième partie de douille (26) présentant la butée de vissage (20), réalisée au niveau de la deuxième partie de carter (5).

4. Dispositif de réglage selon la revendication 3,
**caractérisé en ce**
- **que** la première partie de carter (4) est fabriquée en plastique et les premières parties de douille (25) sont formées de façon intégrale au niveau de la première partie de carter (4), et/ou
- **que** la deuxième partie de carter (5) est fabriquée en plastique ou métal et les deuxièmes parties de douille (26) sont formées de façon intégrale au niveau de la deuxième partie de carter (5).

5. Dispositif de réglage selon la revendication 3 ou 4,
**caractérisé en ce**
- **que** la première partie de douille (25) est constituée de plastique et inclut une première douille métallique (27) définissant la butée de montage (19),
- **que** la deuxième partie de douille (26) est formée par une deuxième douille métallique (28) définissant la butée de vissage (20) ou est constituée de plastique et inclut une deuxième douille métallique (28) définissant la butée de vissage (20),
- **que** la première douille métallique (27) s'appuie axialement sur la deuxième douille métallique (28).

6. Dispositif de réglage selon la revendication 3 ou 4,
**caractérisé en ce**
- **que** l'une partie de douille (25, 26) est formée par une douille métallique commune (49) ou est constituée de plastique et inclut une douille métallique commune (49),
- **que** cette douille métallique commune (49) définit la butée de montage (19) et la butée de de vissage (20),
- **que** cette douille métallique commune (49) s'étend coaxialement à travers l'autre partie de douille (26, 25).

7. Dispositif de réglage selon l'une quelconque des revendications 1 à 6,
**caractérisé en ce**
- **que** plusieurs points de fixation secondaires (14) sont prévus, qui sont configurés respectivement en tant que liaison par encliquetage (29),
- **que** la liaison par encliquetage (29) respective présente un crochet d'encliquetage (30) élastique, réalisé au niveau de la première partie de carter (4) et un contour de blocage (31) réalisé au niveau de la deuxième partie de carter (5), qui coopère avec le crochet d'encliquetage (30) pour fixer la première partie de carter (4) à la deuxième partie de carter (5).

8. Dispositif de réglage selon les revendications 3 et 7,
**caractérisé en ce**
**que** le crochet d'encliquetage (30) respectif est réalisé au niveau de la première partie de douille (25), alors que le contour de blocage (31) respectif est réalisé au niveau de la deuxième partie de douille (26).

9. Dispositif de réglage selon la revendication 7 ou 8,
**caractérisé en ce**
**que** la première partie de carter (4) est fabriquée en plastique et les crochets d'encliquetage (30) sont formés de façon intégrale au niveau de la première partie de carter (4).

10. Dispositif de réglage selon l'une quelconque des revendications 7 à 9,
**caractérisé en ce**
**que** la deuxième partie de carter (5) est fabriquée en plastique ou métal et les contours de blocage (31) sont formés de façon intégrale au niveau de la deuxième partie de carter (5).

11. Dispositif de réglage selon l'une quelconque des revendications 1 à 10,
**caractérisé en ce**
- **qu'**au moins un point de fixation tertiaire (57) est prévu pour la fixation de la première partie de carter (4) à la deuxième partie de carter (5),
- **que** le point de fixation tertiaire (57) respectif est configuré de sorte que, par exemple en tant que liaison collée ou liaison par fusion, il nécessite immédiatement après sa fabrication une période de consolidation prédéterminée pour atteindre sa solidité finale pour la fixation de la couche relative entre la première partie de carter (4) et la deuxième partie de carter (5),
- **que** le point de fixation secondaire (14) respectif est configuré de sorte que, par exemple en tant que liaison par encliquetage (29), il définit immédiatement après sa fabrication la couche relative à fixer entre la première partie de carter (4) et la deuxième partie de carter (5) et est préfixé au moins jusqu'à ce que le point de fixation tertiaire (57) respectif ait atteint sa solidité finale.

12. Dispositif de réglage selon la revendication 11,
**caractérisé en ce**
**que** le point de fixation tertiaire (57) respectif est réalisé en tant que matage à chaud (58),
- **que** le matage à chaud (58) respectif présente une ouverture de tige (59) réalisée au niveau de la deuxième partie de carter (5) et une tige en plastique (60), qui est formée de façon intégrale au niveau de la première partie de carter (4) fabriquée en plastique, traverse l'ouverture de tige (59) et est matée à chaud au niveau d'un côté opposé à la première partie de carter (4) au niveau de la deuxième partie de carter (5).

13. Dispositif de réglage selon la revendication 12 ainsi que selon l'une quelconque des revendications 3 à 5,
**caractérisé en ce**
**que** l'ouverture de tige (59) respective est prévue dans la deuxième partie de carter (5) en plus de l'ouverture de passage (17) respective et s'étend parallèlement à celle-ci.

14. Dispositif de réglage selon la revendication 12 ou 13 ainsi que selon l'une quelconque des revendications 3 à 5,
**caractérisé en ce**
**que** l'ouverture de tige (59) respective est réalisée dans la douille (16) respective.

15. Dispositif de réglage selon l'une quelconque des revendications 11 à 14,
**caractérisé en ce**
**que** chacun ou au moins un point de fixation tertiaire (57) est intégré conjointement avec exactement un point de fixation secondaire (14) dans un point de fixation primaire (12).
